# EUROPEAN PATENT APPLICATION

(11) **EP 1 501 311 A1**
(43) Date of publication of application: **26.01.2005**
(21) Application number: 03723143.8
(22) Date of filing: 18.04.2003
(51) Int. Cl.: H04N 7/26

(54) **MOVING IMAGE TRANSFERRING SYSTEM, MOVING IMAGE ENCODING APPARATUS, MOVING IMAGE DECODING APPARATUS, AND MOVING IMAGE TRANSFERRING PROGRAM**

(30) Priority: 26.04.2002 JP 2002126533
(71) Applicant: NEC Corporation, Minato-ku, Tokyo 108-8001 (JP)
(72) Inventor: HATABU, Atsushi c/o NEC Corporation, Minato-ku, Tokyo 108-8001 (JP); OZAWA, Kazunori c/o NEC Corporation, Minato-ku, Tokyo 108-8001 (JP); DEI, Hiroaki c/o NEC Corporation, Minato-ku, Tokyo 108-8001 (JP)
(74) Representative: VOSSIUS & PARTNER
(86) International application number: PCT/JP2003/004939
(87) International publication number: WO 2003/092295

(57) **Abstract**

A transmission side has first through Nth moving picture encoder/senders (101-1 through 101-N) for compressing moving picture frames into N encoded data and sending the encoded data. Second through Nth moving picture encoder/senders (101-2 through 101-N) compress frames encoded by the first moving picture encoder/sender 101-1 at compression ratios which are higher than that of the first encoder/sender based on interframe prediction by referring to frames at the same time as the interframe prediction performed by the first moving picture encoder/sender. Each one of reception sides selects the encoded data having the lowest compression ratio and high image quality with frame-by-frame or packet-by-packet selection from the received encoded data without error and decodes the selected encoded data.

## Description

### TECHNICAL FIELD

The present invention relates to a moving picture transmission system for encoding and sending moving picture data and receiving and decoding the encoded data that has been sent, and more particularly to a moving picture transmission system, a moving picture encoding apparatus, a moving picture decoding apparatus, and a moving picture transmission program.

### BACKGROUND ART

In recent years, processes for efficiently transmitting moving picture data by encoding the moving picture data according to high efficient compression encoding based on interframe prediction are widely used in the art. Typical examples of moving picture compression encoding include MPEG (Moving picture Expert Group)-1, MPEG-2, MPEG-4, etc.
According to these processes, an encoded image is predicted from temporally preceding and following frames by a process such as motion compensation or the like, and obtained interframe prediction parameters and residual image data are encoded to remove the amount of information of moving picture data that are highly correlated temporally. Furthermore, the residual image data are efficiency compressed by conversion encoding or quantization to make it possible to transmit moving picture data of good image quality in a small transmission band.

According to the conventional moving picture data transmission processes, however, if the transmission data suffer long burst errors or transmission packet dropouts which cannot be restored even with an error correcting code, then the recipient is unable to decode the image data of frames suffering such errors or dropouts.

Countermeasures that can be taken by the recipient against the above problems include an error concealment process for generating image data which contain less noticeable errors from properly decoded image data of temporally preceding and following frames and properly decoded surrounding image data within the same frame. However, it is impossible for the error concealment process to remove decoded image corruptions. Another problem of this process is that since it employs interframe prediction, an image corruption which has occurred is propagated to a succeeding frame.

### DISCLOSURE OF THE INVENTION

The present invention has been made in view of the above drawbacks. It is a first object of the present invention to provide a moving picture transmission system, a moving picture encoding apparatus, a moving picture decoding apparatus, and a moving picture transmission program which make it possible to minimize corruptions of decoded images at a recipient site which are caused by transmission errors of encoded data.

A second object of the present invention to provide a moving picture transmission system, a moving picture encoding apparatus, a moving picture decoding apparatus, and a moving picture transmission program which achieve the first object while reducing any increase in the transmission band that is required.

A third object of the present invention to provide a moving picture transmission system, a moving picture encoding apparatus, a moving picture decoding apparatus, and a moving picture transmission program which achieve the first object while preventing the amount of processing required to decode compression-encoded data from increasing.

To achieve the above objects, there is provided in accordance with the present invention a moving picture transmission system comprising a transmission side sending encoded moving picture data and one or plural reception sides decoding the encoded moving picture data, wherein the transmission side compresses input moving picture frames into a plurality of encoded data at multiple compression ratios and sends the plurality of encoded data, and each one of the reception sides selects one of encoded data with frame-by-frame selection from the plurality of encoded data received by the reception side without error and decodes the selected encoded data.

The transmission side may compress input moving picture frames into a plurality of encoded data at multiple compression ratios and assign a priority order to each data of the encoded data subject to a predetermined assignment rule, and send the plurality of encoded data; and
each one of the reception sides may select the encoded data having the highest priority order with frame-by-frame selection from the plurality of encoded data received by the reception side without error and decode the selected encoded data.

The transmission side may send, as the plurality of encoded data comprising primary encoded data produced by compressing the input moving picture frames using interframe prediction, and encoded data produced by compressing the input moving picture frames at one or plural compression ratios which are higher than the primary encoded data, using interframe prediction referring to frames positioned at the same time as the reference frames referred to in the interframe prediction of the primary encoded data.

The transmission side may send a plurality of encoded data comprising all compression-encoded data or encoded data of selected frames.

The reception side may select the encoded data having the lowest compression ratio in frames from the plurality of properly received encoded data, and decode the selected encoded data.

To achieve the above objects, there is also provided in accordance with the present invention a moving picture transmission system comprising a transmission side sending encoded moving picture data and one or plural reception sides decoding the encoded moving picture data, wherein the transmission side sends a plurality of encoded data comprising primary packet data produced by compressing input moving picture frames into one or plural packets and one or plural packet data produced by compressing the same image area as contained in each packet of the primary packet data at one or plural compression ratios which are higher than the primal packet data; and each one of the reception sides selects either one of the encoded data with packet-by-packet selection from the plurality of encoded packet data received by the transmission reception side without error, and decodes the selected encoded data.

The transmission side may send a plurality of encoded data comprising primary packet data produced by compressing input moving picture frames into one or plural packets, and one or plural packet data produced by compressing the same image area contained in each packet of the primary packet data at one or plural compression ratios which are higher than the or the same as primal packet data, each of the packet data being assigned priority order subject to a predetermined assignment rule; and each one of the reception sides selects the encoded packet data having the highest priority order with packet-by-packet selection from the plurality of packet data received by the reception side without error, and decodes the selected encoded data.

The transmission side may send a plurality of encoded data comprising primary packet data produced by compressing input moving picture frames into one or plural packets using interframe prediction, and one or plural packet data produced by compressing the same image area contained in each packet of the primary packet data at one or plural compression ratios which are higher than the primary packet data using interframe prediction referring to frames positioned at the same time as the reference frames referred to in the interframe prediction of the primary packet data.

The transmission side may send a plurality of encoded data comprising all compression-encoded packet data or selected packet data. The reception side may select encoded data having the lowest compression ratio in packet data containing the same image area from the plurality of properly received encoded data, and decode the selected encoded data. The transmission side may multiplex the plurality of encoded data with time differences added therebetween and send the multiplexed encoded data, and each one of the reception sides may demultiplex the multiplexed and sent encoded data into a plurality of encoded data.

The moving picture transmission system may comprise a moving picture encoding apparatus as the transmission side and one or plural moving picture decoding apparatuses as the reception sides, the moving picture encoding apparatus having a plurality of encoding means for compressing input moving picture frames into a plurality of encoded data at multiple compression ratios and sending the encoded data, each one of the moving picture decoding apparatuses having a plurality of encoded-data-receiving means for receiving the plurality of encoded data which have been sent and detecting bit errors or packet losses of the received encoded data, a selecting mean for selecting the encoded data of the lowest compression ratio from the encoded data which have been received free of bit errors or packet losses by the encoded-data-receiving means with frame-by-frame selection, and a decoding mean for decoding the encoded data selected by the selecting mean.

The transmission side may have delay-adding means for delaying part of the encoded data to add the time differences between the plurality of encoded data, and multiplexing means for multiplexing the plurality of encoded data with the time differences added therebetween and sending the multiplexed encoded data, and each one of the reception sides may have demultiplexing means for demultiplexing the multiplexed and sent data into a plurality of encoded data.

To achieve the above objects, there is further provided in accordance with the present invention a moving picture encoding apparatus for compressing moving picture data and sending the encoded data to one or plural moving picture decoding apparatuses, wherein the moving picture encoding apparatus sends, to the moving picture decoding apparatuses, a plurality of encoded data comprising primary encoded data produced by compressing the input moving picture frames using interframe prediction, and encoded data produced by compressing the input moving picture frames at one or plural compression ratios which are higher than the primary encoded data using interframe prediction referring to frames positioned at the same time as the reference frames referred to in the interframe prediction of the primary encoded data.

The moving picture encoding apparatus may send a plurality of encoded data comprising all compression-encoded data or encoded data of selected frames.

To achieve the above objects, there is further provided in accordance with the present invention a moving picture encoding apparatus for compressing moving picture data and sending the encoded data to one or plural moving picture decoding apparatuses, wherein the moving picture encoding apparatus sends, to the moving picture decoding apparatuses, a plurality of encoded data comprising primary packet data produced by compressing input moving picture frames using interframe prediction, and one or plural packet data produced by compressing the same image area as contained in each packet of the primary packet data at one or plural compression ratios which are higher than the or the same as primary packet data using interframe prediction referring to frames positioned at the same time as reference frames referred to in the interframe prediction of the primary packet data.

The moving picture encoding apparatus may send a plurality of encoded data comprising all compression-encoded data or selected packet data.

The moving picture encoding apparatus may further comprise delay adding means for delaying part of the encoded data to add the time differences between the plurality of encoded data, and multiplexing means for multiplexing the plurality of encoded data with the time differences added therebetween and sending the multiplexed encoded data.

To achieve the above objects, there is also provided in accordance with the present invention a moving picture decoding apparatus for receiving data produced by compressing moving picture data from a moving picture encoding apparatus and decoding the received data, wherein the moving picture decoding apparatus receives a plurality of encoded data comprising primary encoded data produced by compressing input moving picture frames using interframe prediction, and encoded data produced by compressing the input moving picture frames at one or plural compression ratios which are higher than the primary encoded data using interframe prediction referring to frames positioned at the same time as the reference frames used in the interframe prediction of the primary encoded data, and selects the encoded data having the lowest compression ratio with frame-by-frame selection from the encoded data free of bit errors or packet losses of the received encoded data, and decodes the selected encoded data.

The moving picture decoding apparatus may comprise demultiplexing means for demultiplexing the plurality of encoded data which have been multiplexed with time differences added therebetween and sent, into a plurality of encoded data.

To achieve the above objects, there is also provided in accordance with the present invention a moving picture decoding apparatus for receiving data produced by compressing moving picture data from a moving picture encoding apparatus and decoding the received data, wherein the moving picture decoding apparatus receives a plurality of encoded data comprising primary encoded data produced by compressing input moving picture frames using interframe prediction, and encoded data produced by compressing the input moving picture frames at one or plural compression ratios which are higher than the primary encoded data using interframe prediction referring to frames positioned at the same time as the reference frames used in the interframe prediction of the primary encoded data, and selects the encoded data having the lowest compression ratio with frame-by-frame selection from the encoded data free of bit errors or packet losses of the received encoded data, and decodes the selected encoded data.

The moving picture decoding apparatus may comprise demultiplexing means for demultiplexing the plurality of encoded data which have been multiplexed with time differences added therebetween and sent, into a plurality of encoded data.

To achieve the above objects, there is further provided in accordance with the present invention a moving picture transmission system having a moving picture transmission program for enabling a computer processor to encode moving picture data and send encoded data at a transmission side, and enabling a computer processor to receive and decode the encoded data at reception sides, wherein the moving picture transmission program enables the computer processor at the transmission side to compress input moving picture frames into a plurality of encoded data at multiple compression ratios and sends the encoded data, and enables the computer processor at the reception side to select any one encoded data with frame-by-frame selection from the plurality of properly received encoded data and decode the selected encoded data.

The moving picture transmission program may enable the computer processor at the reception side to select the encoded data having the lowest compression ratio with frame-by-frame selection from the plurality of properly received encoded data and decode the selected encoded data.

To achieve the above objects, there is further provided in accordance with the present invention a moving picture transmission system having a moving picture transmission program for enabling a computer processor to encode moving picture data and send the encoded data at a transmission side, and enabling a computer processor to receive and decode the encoded data at a reception side, wherein said moving picture transmission program enables the computer processor at the transmission side to send a plurality of encoded data comprising primary packet data produced by compressing input moving picture frames and one or plural packet data produced by compressing the same image area as contained in each packet of the primary packet data at one or plural compression ratios which are higher than the primary packet data, and enables the computer processor at the reception side to select either one of the encoded data with packet-by-packet selection from the plurality of properly received encoded data, and decode the selected encoded data.

The moving picture transmission program may enable the computer processor at the reception side to select the encoded data having the lowest compression ratio with packet-by-packet selection from the plurality of properly received encoded data and decode the selected encoded data. According to the present invention, as described above, moving picture data are compressed into a plurality of encoded data having different compression ratios, and the encoded data are sent. Encoded data having the lowest compression ratio and high image quality are selected in frames or packets from the properly received encoded data, and decoded. Therefore, even if there is employed a transmission path which is of low reliability, frequently causing transmission errors and packet errors of highly burst nature, the probability that all the encoded data are transmitted in error is reduced, making it possible to prevent decoded images from suffering significant corruptions.

According to the present invention, furthermore, encoded data other than primary encoded data of a plurality of encoded data are encoded at a compression ratio which is higher than or the same as the primary encoded data, and the encoded data other than the primary encoded data can be encoded with respect to only part of a frame or an image area for which the primary encoded data have been encoded. Consequently, an increase caused in the transmission rate when the plural encoded data are sent may be reduced.

According to the present invention, furthermore, the transmission side generates encoded data containing the same frame or the same image area, and the reception side selects encoded data in frames or packets from a plurality of encoded data that are received and decodes the selected encoded data. Therefore, the reception side is not required to decode the plurality of received encoded data for the purpose of decoding the same frame or the same image area, making it possible to reduce an increase in the amount of calculations needed by the reception side.

### BRIEF DESCRIPTION OF THE DRAWINGS

Fig. 1 is a block diagram showing an arrangement of a moving picture transmission system which realizes a moving picture transmission process according to a first embodiment of the present invention;
Fig. 2 is a block diagram showing an arrangement of a moving picture encoding apparatus according to the first embodiment of the present invention;
Fig. 3 is a block diagram showing an arrangement of a moving picture decoding apparatus according to the first embodiment of the present invention;
Fig. 4 is a flowchart showing an encoded data reconstructing sequence in the moving picture decoding apparatus according to the first embodiment of the present invention;
Fig. 5 is a flowchart showing an encoded data reconstructing sequence that is carried out if three encoded packet data are transmitted to the moving picture decoding apparatus in the first embodiment;
Fig. 6 is a block diagram showing an arrangement of a moving picture transmission system which realizes a moving picture encoded data packet transmission process according to a second embodiment of the present invention;
Fig. 7 is a flowchart showing an encoded data reconstructing sequence in a moving picture decoding apparatus according to a third embodiment of the present invention; and
Fig. 8 is a flowchart showing an encoded data reconstructing sequence that is carried out if three encoded packet data are transmitted to the moving picture decoding apparatus in the third embodiment.

### BEST MODE FOR CARRYING OUT THE INVENTION

Preferred embodiments of the present invention will be described in detail with reference to the drawings.

### (1st Embodiment)

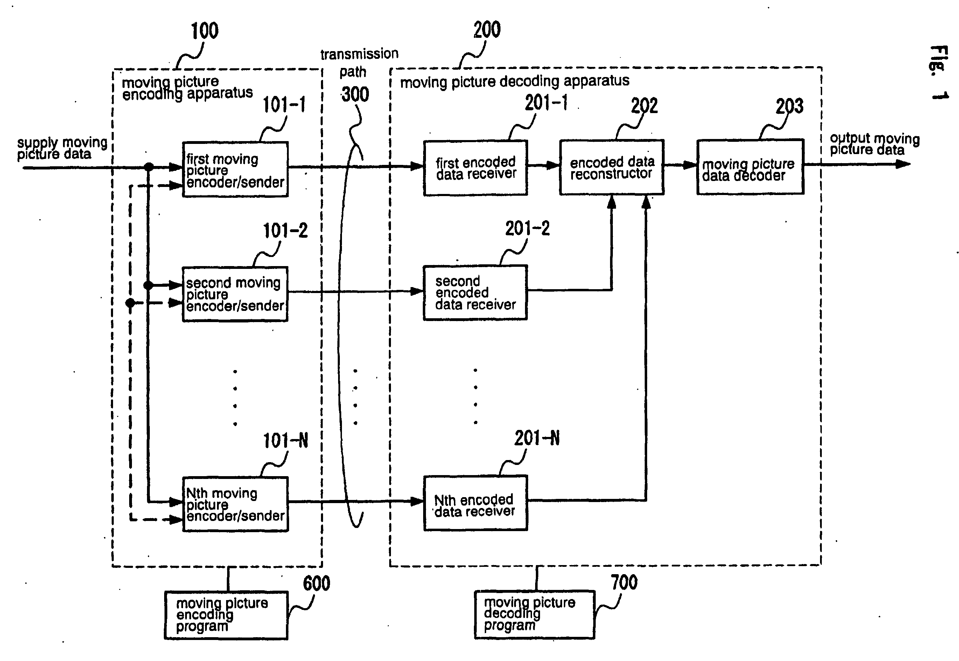

A moving picture transmission system according to a first embodiment of the present invention will be described in detail below with reference to the drawings. FIG. 1 shows an overall arrangement of the moving picture transmission system according to the first embodiment.

As shown in Fig. 1, the moving picture transmission system according to the present embodiment comprises moving picture encoding apparatus 100 for encoding moving picture data, moving picture decoding apparatus 200, and transmission path 300 for transmitting encoded moving picture data from moving picture encoding apparatus 100 to moving picture decoding apparatus 200. In Fig. 1, N is an integer of 2 or greater, representing the number of encoded data sent from moving picture encoding apparatus 100.
Moving picture encoding apparatus 100 is supplied with frames of moving picture data, encodes the supplied moving picture data into N encoded data, and sends the encoded data as 1 st through Nth moving picture encoded packet data.

As shown in Fig. 1, moving picture encoding apparatus 100 has first through Nth N moving picture encoder/senders 101-1 through 101-N. First moving picture encoder/sender 101-1 encodes the frames of moving picture data supplied to moving picture encoding apparatus 100 based on interframe prediction according to a primary compression encoding process, and sends the encoded data to moving picture decoding apparatus 200.

Second through Nth N moving picture encoder/senders 101-2 through 101-N encode frames encoded by first moving picture encoder/sender 101-1 at a compression ratio higher than first moving picture encoder/sender 101-1 based on interframe prediction by referring to one or more frames positioned at the same time as a reference frame or frames used in the interframe prediction performed by first moving picture encoder/sender 101-1.

As described above, the compression ratio for encoding frames with second through Nth N moving picture encoder/senders 101-2 through 101-N is higher than the compression ratio of first moving picture encoder/sender 101-1. Second through Nth N moving picture encoder/senders 101-2 through 101-N may have respective different compression ratios or the same compression ratio.

Moving picture decoding apparatus 200 receives and decodes the N encoded data sent from moving picture encoding apparatus 100 into moving picture data. As shown in Fig. 1, moving picture decoding apparatus 200 comprises first through Nth encoded data receivers 201-1 through 201-N for receiving the encoded data sent from first through Nth N moving picture encoder/senders 101-1 through 101-N of moving picture encoding apparatus 100, encoded data reconstructor 202, and moving picture data decoder 203. Encoded data reconstructor 202 selects one encoded data having the lowest compression ratio as encoded data to be decoded, from a maximum of N encoded data free of transmission errors and dropouts received by first through Nth encoded data receivers 201-1 through 201-N.

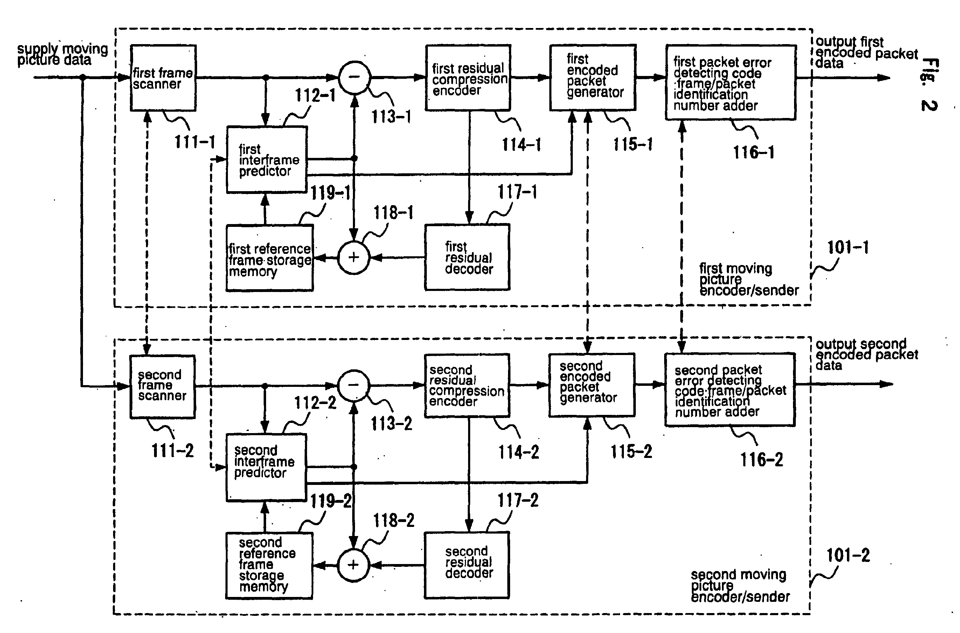

Moving picture data decoder 203 decodes encoded data output from encoded data reconstructor 202 into moving picture data.
Details of the moving picture encoder/senders of moving picture encoding apparatus 100 are shown in Fig. 2. In Fig. 2, the number N of encoded data output by the apparatus is illustrated as "2".

First moving picture encoder/sender 101-1 shown in Fig. 2 has first frame scanner 111-1 for rearranging supplied frames of moving picture data into an order to be encoded, first interframe predictor 112-1 for performing interframe prediction on an image input from first frame scanner 111-1 based on one or more decoded images stored in first reference frame storage memory 119-1, first residual calculator 113-1 for subtracting a prediction image obtained by first interframe predictor 112-1 from the input frame image to calculate a residual, first residual compression encoder 114-1 for compression-encoding the residual image obtained by first residual calculator 113-1 according to a predetermined process, and first encoded packet generator 115-1 for variable-length-encoding the interframe predictive parameters obtained by first interframe predictor 112-1 and the compressed data of the residual image obtained by first residual compression encoder 114-1 into a bit string and outputting the bit string in packets.

First moving picture encoder/sender 101-1 also has first packet error detecting code―frame/packet identification number adder 116-1 for adding an error detecting code and frame/packet identification numbers in order for a receiving apparatus to detect transmission errors and packet losses of the encoded packet data output by first encoded packet generator 115-1, first residual decoder 117-1 for determining decoded data of the residual encoded by first residual compression encoder 114-1, first decoded image calculator 118-1 for adding the prediction image generated by first interframe predictor 112-1 and the residual decoded by first residual decoder 117-1 into a decoded image, and first reference frame storage memory 119-1 for storing decoded images in preparation for the encoding of a next frame.

First moving picture encoder/sender 101-1 according to the present embodiment operates with the above processing components.

Second moving picture encoder/sender 101-2 shown in Fig. 2 has second frame scanner 111-2 for rearranging supplied moving picture frames into an order to be encoded, second interframe predictor 112-2 for performing interframe prediction on an image input from second frame scanner 111-2 based on one or more decoded images stored in second reference frame storage memory 119-2, second residual calculator 113-2 for subtracting a prediction image obtained by second interframe predictor 112-2 from the input frame image to calculate a residual, second residual compression encoder 114-2 for compression-encoding the residual image obtained by second residual calculator 113-2 according to a predetermined process, and second encoded packet generator 115-2 for variable-length-encoding the interframe predictive parameters obtained by second interframe predictor 112-2 and the compressed data of the residual image obtained by second residual compression encoder 114-2 into a bit string and outputting the bit string in packets.

Second moving picture encoder/sender 101-2 also has second packet error detecting code―frame/packet identification number adder 116-2 for adding an error detecting code and frame/packet identification numbers in order for the receiving apparatus to detect transmission errors and packet losses of the encoded packet data output by second encoded packet generator 115-2, second residual decoder 117-2 for determining decoded data of the residual encoded by second residual compression encoder 114-2, second decoded image calculator 118-2 for adding the prediction image generated by second interframe predictor 112-2 and the residual decoded by second residual decoder 117-2 into a decoded image, and second reference frame storage memory 119-2 for storing decoded images in preparation for the encoding of a next frame.

Second moving picture encoder/sender 101-2 according to the present embodiment operates with the above processing components. Second frame scanner 111-2 and second interframe predictor 112-2 are controlled to perform interframe prediction by referring to one or more frames positioned at the same time as the interframe prediction performed by first interframe predictor 112-1. Second residual compression encoder 114-2 is controlled such that the compression ratio of the encoded data output by second moving picture encoder/sender 101-2 is higher than that of first moving picture encoder/sender 101-1.

In Fig. 2, only second moving picture encoder/sender 101-2 is shown. However, third through Nth moving picture encoder/senders 101-3 through 101 -N are of the same arrangement as second moving picture encoder/sender 101-2.

The arrangement and operation of moving picture encoding apparatus according to the present embodiment have been described above.

In the present embodiment, first packet error detecting code―frame/packet identification number adder 116-1 is provided for adding an error detecting code and frame/packet identification numbers to the first encoded packet data output from first encoded packet generator 115-1. However, any other processes may be employed if they enable moving picture decoding apparatus 200 to detect transmission errors and packet losses of the encoded packet data that are sent. For example, if the first encoded packet transmission path has a mechanism for detecting transmission errors, then there is no need for first packet error detecting code―frame/packet identification number adder 116-1 to add an error detecting code. According to another example, if the encoded data output from first encoded packet generator 115-1 contain information for identifying frames and packets, then there is no need for first packet error detecting code―frame/packet identification number adder 116-1 to add frame/packet identification numbers.

Similarly, second packet error detecting code―frame/packet identification number adder 116-2 is provided for adding an error detecting code and frame/packet identification numbers to the second encoded packet data. However, any other processes may be employed if they enable moving picture decoding apparatus 200 to detect transmission errors and packet losses of the encoded packet data that are sent.

In a preferred specific example of the first embodiment described above, moving picture encoding apparatus 100 is connected to an Internet communication network, compresses a moving picture input by a camera or the like into encoded data according to the MPEG-4 Visual process, and transmits the encoded data using the UDP/IP protocol. First and second interframe predictors 112-1, 112-2 perform interframe prediction based on motion compensation. First and second residual compression encoders 114-1, 114-2 perform a compression process based on two-dimensional discrete cosine transform (2D-DCT) and quantization.

Second residual compression encoder 114-2 compresses image data such that the compression ratio of the encoded data produced by second moving picture encoder/sender 101-2 is higher than the compression ratio of the encoded data produced by first moving picture encoder/sender 101-1, according to a process for quantizing 2D-DCT coefficients using quantization parameters greater than first residual compression encoder 114-1 or a process of adaptively cutting off high-order 2D-DCT.

First and second residual decoders 117-1, 117-2 perform inverse quantization and two-dimensional inverse discrete cosine transform (2D-IDCT). First and second encoded packet generators 115-1, 115-2 encode quantization DCT coefficients output from first and second residual compression encoders 114-1, 114-2 and motion vectors output from first and second interframe predictors 112-1, 112-2, according to the syntax prescribed by the MPEG-4 Visual process. First and second packet error detecting code-frame/packet identification number adders 116-1, 116-2 generate a UDP datagram including a check sum for detecting an error, and sends the generated UDP datagram to moving picture decoding apparatus 200 connected to the Internet.

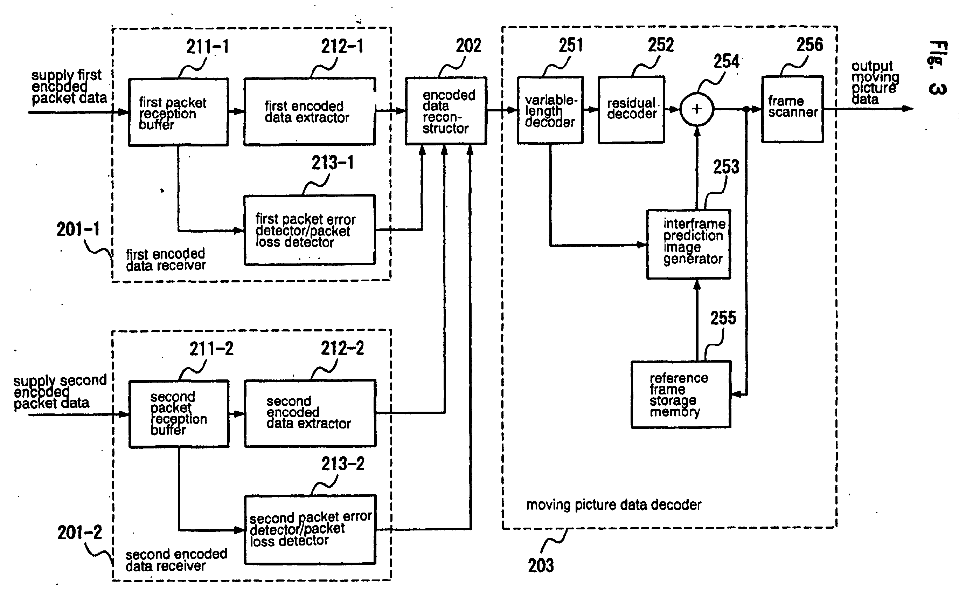

Fig. 3 shows a detailed arrangement of moving picture decoding apparatus 200 according to the first embodiment.

First encoded data receiver 201-1 shown in Fig. 3 has first packet reception buffer 211-1 for receiving first encoded packet data sent from the encoding apparatus, first encoded data extractor 212-1 for extracting moving picture encoded data from the packet data received by first packet reception buffer 211-1, and first packet error detector/packet loss detector 213-1 for detecting bit errors and packet losses that have occurred when the first encoded packet data are transmitted.

First encoded data receiver 201-1 operates with the processors of the above components.

Similarly, second encoded data receiver 201-2 shown in Fig. 3 has second packet reception buffer 211-2 for receiving second encoded packet data sent from the encoding apparatus, second encoded data extractor 212-2 for extracting moving picture encoded data from the packet data received by second packet reception buffer 211-2, and second packet error detector/packet loss detector 213-2 for detecting bit errors and packet losses that have occurred when the second encoded packet data are transmitted.

Second encoded data receiver 201-2 operates with the processors of the above components.

Encoded data reconstructor 202 reconstructs the two encoded data sent from the encoding apparatus into single encoded data according to the results of errors and packet losses detected by first packet error detector/packet loss detector 213-1 and second packet error detector/packet loss detector 213-2.

Moving picture data decoder 203 shown in Fig. 3 comprises variable-length decoder 251 for variable-length-decoding the encoded data reconstructed by encoded data reconstructor 202, residual decoder 252, interframe prediction image generator 253, decoded image calculator 254 for adding a residual produced by residual decoder 252 and a prediction image produced by interframe prediction image generator 253 to determine a decoded image, reference frame storage memory 255 for storing decoded image data produced by decoded image calculator 254, which is to be used in decoding a following frame, and frame scanner 256 for rearranging and outputting decoded images in an order to be reproduced.

Moving picture data decoder 203 of moving picture decoding apparatus 200 operates with the processors of the above components to produce moving picture data transmitted from moving picture encoding apparatus 100.

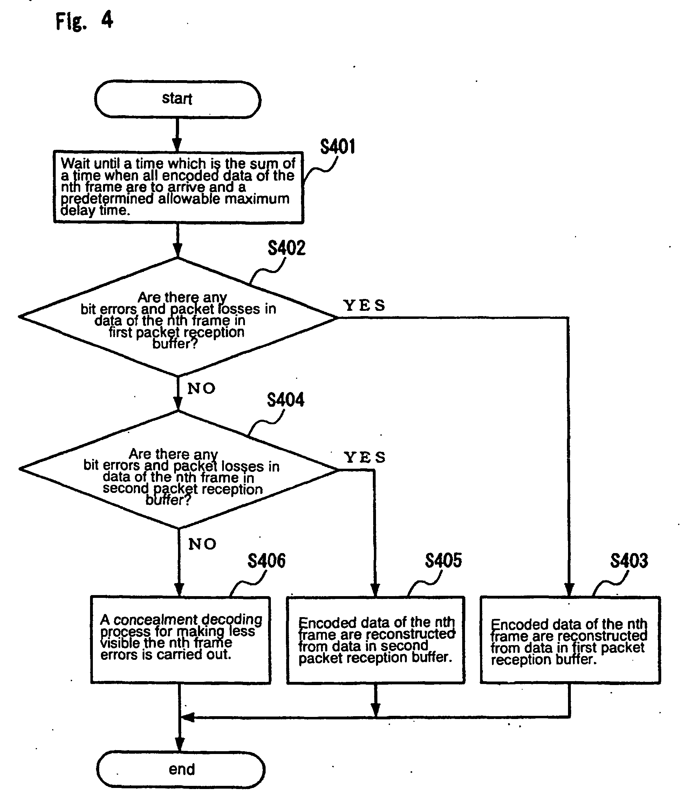

An encoded data reconstructing sequence of encoded data reconstructor 202 according to the present embodiment will be described below with reference to a flowchart shown in Fig. 4. The sequence shown in Fig. 4 represents a process of reconstructing encoded data of an nth frame where n is an integer.

In step S401, control waits until a time which is the sum of a time when all encoded data of the nth frame are to arrive at first packet reception buffer 211-1 and second packet reception buffer 211-2 and a predetermined allowable maximum delay time. Then, control goes to step S402.

In step S402, the following branching process is performed depending on the results of errors and packet losses detected by first packet error detector/packet loss detector 213-1: If all encoded data of the nth frame are received by first packet reception buffer 211-1 and no error is detected in the data, then control goes to step S403. Otherwise, control goes to step S404.

In step S403, the encoded data of the nth frame output from first encoded data extractor 212-1 are transferred as encoded data to be decoded to variable-length decoder 251. The, the encoded data reconstructing process is ended.

In step S404, the following branching process is performed depending on the results of errors and packet losses detected by second packet error detector/packet loss detector 213-2: If all encoded data of the nth frame are received by second packet reception buffer 211-2 and no error is detected in the data, then control goes to step S405. Otherwise, control goes to step S406.

In step S405, the encoded data of the nth frame output from second encoded data extractor 212-2 are transferred as encoded data to be decoded to variable-length decoder 251. The, the encoded data reconstructing process is ended.

Control proceeds to step S406 when the encoded data of the nth frame cannot be received free of bit errors and packet losses by either one of first and second packet reception buffers 211-1, 211-2.

In step S406, therefore, a concealment process for making less visible decoded image corruptions due to reception errors is carried out by an appropriate method.

For example, a command is sent to moving picture data decoder 203 to use a decoded image of a preceding (n-1)th frame as a decoded image of the nth frame.

Alternatively, processes to be described below may be employed. If some of the encoded data of the nth frame are received by first packet reception buffer 211-1, then the received encoded data are used for decoding the nth frame. If no encoded data at all are received by first packet reception buffer 211-1 and some of the encoded data of the nth frame are received by second packet reception buffer 211-2, then the encoded data received by the second packet reception buffer are used for decoding the nth frame. If no encoded data at all are received by both the first and second packet reception buffers, then a decoded image of a preceding (n-1)th frame is output.

After the above concealment process is performed in step S406, the encoded data reconstructing process for the nth frame is ended.

The encoded data reconstructing process carried out by encoded data reconstructor 202 has been described above.

Fig. 4 illustrates the operation of encoded data reconstructor 202 where, as shown in Figs. 2 and 3, N shown in Fig. 1 is "2", moving picture encoding apparatus 100 has first moving picture encoder/sender 101-1 and second moving picture encoder/sender 101-2, and moving picture decoding apparatus 200 has first encoded data receiver 201-1 and second encoded data receiver 201-2.

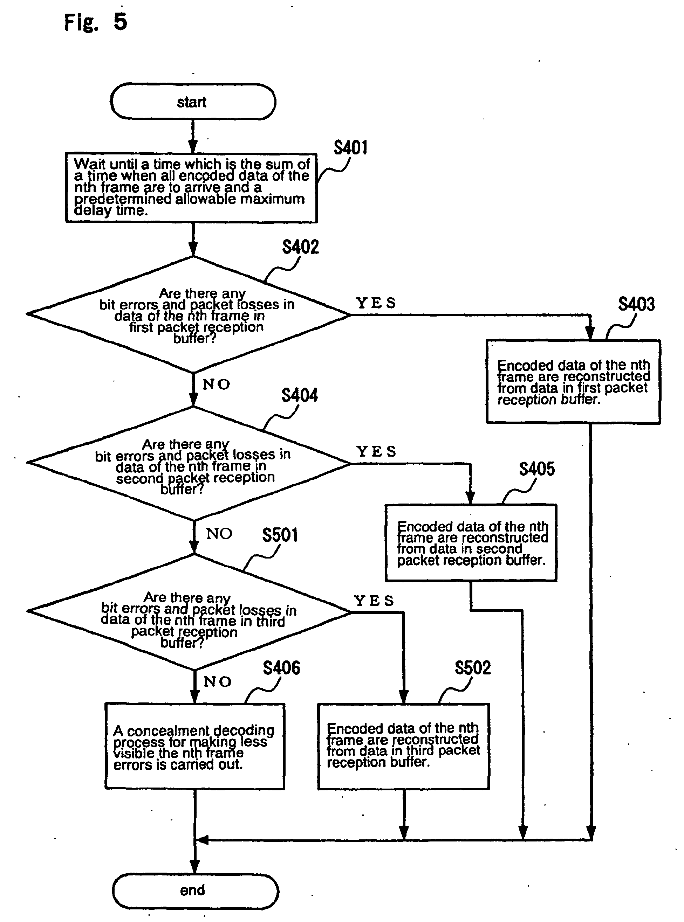

If N shown in Fig. 1 is "3" and three or more encoded data are transmitted from moving picture encoding apparatus 100 to moving picture decoding apparatus 200, then encoded data reconstructor 202 operates according to a flowchart shown in Fig. 5.

In the operation of encoded data reconstructor 202 shown in Fig. 5, moving picture encoding apparatus 100 has first moving picture encoder/sender 101-1 through third moving picture encoder/sender 101-3, moving picture decoding apparatus 200 has first encoded data receiver 201-1 through third encoded data receiver 201-3, and the compression ratio for frame encoding is successively higher in the order from first moving picture encoder/sender 101-1 through third moving picture encoder/sender 101-3.

In Fig. 5, the steps represented by the same step numbers as those in Fig. 4 represent the same processing as in Fig. 4, and steps S501, S502 are added. Specifically, if a data error and a packet loss are present in the encoded data in the second packet reception buffer, then it is determined in step S501 whether there are a data error and a packet loss in the encoded data in the third packet reception buffer. If there are not a data error and a packet loss, then the encoded data in the third packet reception buffer are transferred as encoded data to be decoded to variable-length decoder 251.

If the encoded data of the nth frame cannot be received free of bit errors and packet losses by either one of the packet reception buffers, then the concealment process in step S406 is performed.

As described above, by determining whether there are not a bit error and a packet loss in the encoded data of the frame received by the packet reception buffers in the ascending order of compression ratios for frame encoding, the encoded data are transferred as encoded data to be decoded to variable-length decoder 251 so that priority is given to the encoded data of the lower compression ratio.

If the compression ratios for frame encoding of second moving picture encoder/sender 101-2 and third moving picture encoder/sender 101-3 are the same as each other, then priority may be given to either one of their encoded data.

Alternatively, the encoded sent from first through Nth N moving picture encoder/senders 101-1 through 101-N of moving picture encoding apparatus 100 may be ordered so that priority is given to the encoded data of the lower compression ratio, for example, and encoded data reconstructor 202 of moving picture decoding apparatus 200 may select encoded data of the highest order for each frame from a plurality of properly received encoded data.

In the present embodiment, first packet error detector/packet loss detector 213-1 may employ any process for detecting bit errors and packet losses in the first encoded packet data. For example, it may detect bit errors and packet losses based on the error detecting code and the frame/packet numbers that have been added by moving picture encoding apparatus 100. Alternatively, if the encoded data transmission path has an error detecting function, then the detected result thereof may be employed. If information which identifies encoded frames is included in the encoded data, then the information included in the encoded data may be employed.

Likewise, second packet error detector/packet loss detector 213-2 may employ any process for detecting bit errors and packet losses in the first encoded packet data.

In the encoded data reconstructing sequence of encoded data reconstructor 202, any processes of waiting for the reception of the encoded data of the nth frame may be employed in step S401 insofar as they are capable of detecting packet losses while holding a packet transmission delay within a predetermined range.

In a further preferred specific example of the present embodiment, moving picture decoding apparatus 200 is connected to an Internet communication network, receives packet data sent from moving picture encoding apparatus 200 connected at another spot to the Internet communication network using the UDP/IP protocol, decodes moving picture encoded data included in the received UDP datagram, and displays an obtained moving picture on a display. The moving picture encoded data are data according to the MPEG-4 Visual process, for example. First packet error detector/packet loss detector 213-1 and second packet error detector/packet loss detector 213-2 detect a transmission error by calculating a check sum included in the UDP datagram. Moving picture data decoder 203 which comprises variable-length decoder 251, residual decoder 252, interframe prediction image generator 253, decoded image calculator 254, reference frame storage memory 255, and frame scanner 256 is an ordinary decoding apparatus compatible with the MPEG-4 Visual process.

Variable-length decoder 251 variable-length-decodes data that are encoded according to the MPEG-4 Visual process to extract compression information such as DCT quantization coefficients, motion vectors, etc. Residual decoder 252 performs inverse quantization and two-dimensional inverse discrete cosine transform. Interframe prediction image generator 253 generates a motion-compensated image according to decoded motion vectors.

### (2nd Embodiment)

In the first embodiment described above, the first and second encoded packet data may be transmitted from moving picture encoding apparatus 100 to moving picture decoding apparatus 200 according to any processes. For making the present invention more effective to reduce significant corruptions of decoded images, it is preferably to employ a process for reducing the correlation between bit errors and packet losses that occur in the first encoded packet data and bit errors and packet losses that occur in the second encoded packet data which are produced by encoding the same frame image as with the first encoded packet data.

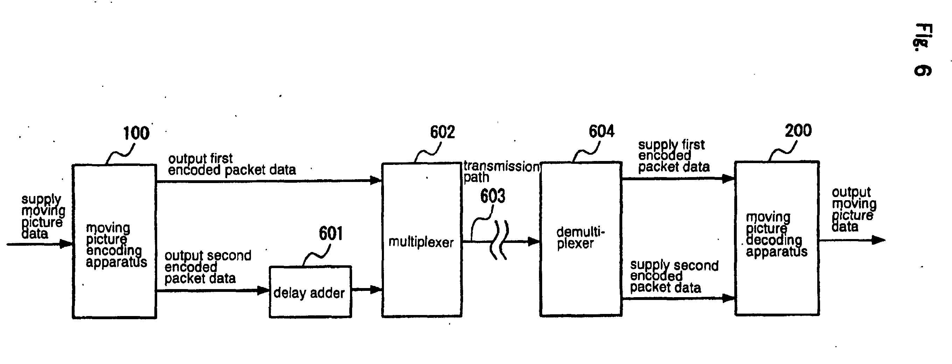

Fig. 6 shows a second embodiment for realizing such a preferable encoded packet data transmission process.

The second embodiment shown in Fig. 6 has delay adder 601 for adding a constant or adaptively variable delay time to the second encoded packet data output from moving picture encoding apparatus 100 according to the first embodiment shown in Fig. 2 and sending the data with the added delay time, multiplexer 602 for multiplexing the first encoded packet data output from moving picture encoding apparatus 100 and the second encoded packet data output from delay adder 601 and sending the multiplexed data to a transmission path, transmission path 603 for transmitting the data multiplexed by multiplexer 602 from the sending apparatus to the receiving apparatus, and demultiplexer 604 for receiving the data from transmission path 603, demultiplexing the data into the first encoded packet data and the second encoded packet data, outputting them to moving picture decoding apparatus 200 according to the first embodiment.

The delay time that is added to the second encoded packet data by delay adder 601 is determined by a maximum burst time of bit errors and packet losses that occur in transmission path 603. Therefore, even when a burst error occurs in transmission path 603, since the probability that both the first and second encoded data produced by encoding the same frame are affected by the error is reduced, it is possible to reduce significant image quality deteriorations due to a loss of encoded frame data.

In the second embodiment, delay adder 602 and multiplexer 602 may be included in moving picture encoding apparatus 100, and demultiplexer 604 may be included in moving picture decoding apparatus 200.

According to the second embodiment described above, moving picture encoding apparatus 100 encodes one moving picture data into two encoded data and sends the encoded data. Second encoder/sender 101-2 compression-encodes frames encoded by first encoder/sender 101-1 based on interframe prediction by referring to a frame at the same time as the interframe prediction performed by first encoder/sender 101-1. Moving picture decoding apparatus 200 on the reception side selects and decodes frames of encoded data which are of a low compression ratio and high image quality from the properly received encoded data. As a result, even if the transmission path is of low reliability, frequently causing transmission errors and packet errors of highly burst nature, the probability that both the two encoded data are transmitted in error is reduced, making it possible to prevent transmitted decoded images from suffering significant corruptions.

An increase caused in the transmission band when the second encoded data are sent may be reduced by increasing the compression ratio of the second encoded data.

Furthermore, since moving picture decoding apparatus 200 may decode only one of the two encoded data that are received, the amount of calculations that are required thereby is not appreciably greater than the amount of calculations that are required by ordinary moving picture decoding apparatus.

In the second embodiment, in addition to the advantages of the first embodiment, moving picture encoding apparatus 100 encodes one moving picture data into two encoded data and sends the encoded data at a constant or adaptively variable time interval. Therefore, even when a burst error occurs in the transmission path, since the probability that both the first and second encoded data produced by encoding the same frame are affected by the error is reduced, it is possible to reduce significant image quality deteriorations due to a loss of encoded frame data.

### (3rd Embodiment]

A third embodiment of the present invention will be described below. The arrangement and operation of the third embodiment are substantially the same as those of the first embodiment, and comprises, as shown in Fig. 1, moving picture encoding apparatus 100, moving picture decoding apparatus 200, and transmission path 300 for transmitting encoded data. N represents the number of encoded data sent from moving picture encoding apparatus 100.

The arrangement of moving picture encoding apparatus 100 is substantially the same as that of the first embodiment. However, operation of components of moving picture encoding apparatus 100 is different from that of the first embodiment.

Encoded data of an input frame image that is encoded by first moving picture encoder/sender 101-1 comprise one or plural packet data, each representing encoded interframe prediction parameters and residual image compression data with respect to an image area contained in the input frame image.

Second through Nth N moving picture encoder/senders 101-2 through 101-N encode the image area included in the packet data encoded by first moving picture encoder/sender 101-1 at a compression ratio higher than first moving picture encoder/sender 101-1 based on interframe prediction by referring to one or more frames positioned at the same time as a reference frame used in the interframe prediction performed by first moving picture encoder/sender 101-1, and sends the obtained encoded packet data to moving picture decoding apparatus 200. Other operation details than described above are basically the same as those of the first embodiment.

The arrangement of moving picture decoding apparatus 200 is also substantially the same as that of the first embodiment. However, operation of components of moving picture decoding apparatus 200 is different from that of the first embodiment.

As with the first embodiment, encoded data reconstructor 202 selects one packet having the lowest compression ratio as encoded data to be decoded, from a maximum of N encoded packet data free of transmission errors and dropouts received by first through Nth encoded data receivers 201-1 through 201-N. Encoded data reconstructor 202 selects packet data sent by moving picture encoding apparatus 100. Other operation details than described above are basically the same as those of the first embodiment.

The arrangement and operation of the moving picture encoder/senders according to the third embodiment are substantially the same as the moving picture encoder/senders of the first embodiment. The moving picture encoder/senders according to the third embodiment differ from moving picture encoder/senders of the first embodiment only as to operation of first encoded packet generator 115-1, second encoded packet generator 115-2, first packet error detecting code―frame/packet identification number adder 116-1, and second packet error detecting code―frame/packet identification number adder 116-2.

In moving picture encoding apparatus 100 according to the present embodiment, first encoded packet generator 115-1 and second encoded packet generator 115-2 generate encoded packet data such that an image area contained in the encoded packet data generated by first encoded packet generator 115-1 and an image area contained in the encoded packet data generated by second encoded packet generator 115-2 coincide with each other.

First packet error detecting code―frame/packet identification number adder 116-1, and second packet error detecting code―frame/packet identification number adder 116-2 operate to add the same packet identification number to encoded packet data corresponding to the same image area of the same frame. However, if the packet data encoded by first and second encoded packet generators 115-1, 115-2 contain a frame number and information for identifying the position of the image area contained in the packet data, then no frame/packet identification number may not be added.

Other operation details of the processors than described above are the same as those of the first embodiment.

In a preferred specific example of the present embodiment, the MPEG Visual process is used for the compression encoding of moving pictures. According to this process, an input image frame is divided into rectangular areas of constant size called macroblocks and then compressed, and the compressed image information in each of the macroblocks is encoded in packets called video packets into a bit string. The video packets contain compressed data with respect to any desired number of macroblocks, and the bit string data encoded by this process can be decoded in video packets.

First encoded packet generator 115-1 and second encoded packet generator 115-2 output encoded data in video packets. Video packets encoded by second encoded packet generator 115-2 are generated so as to contain macroblocks in the same area as the video packets encoded by first encoded packet generator 115-1.

The arrangement and operation of moving picture decoding apparatus 200 according to the present embodiment are substantially the same as those of the moving picture decoding apparatus according to the first embodiment, except that only operation of encoded data reconstructor 202 in Fig. 3 is different.

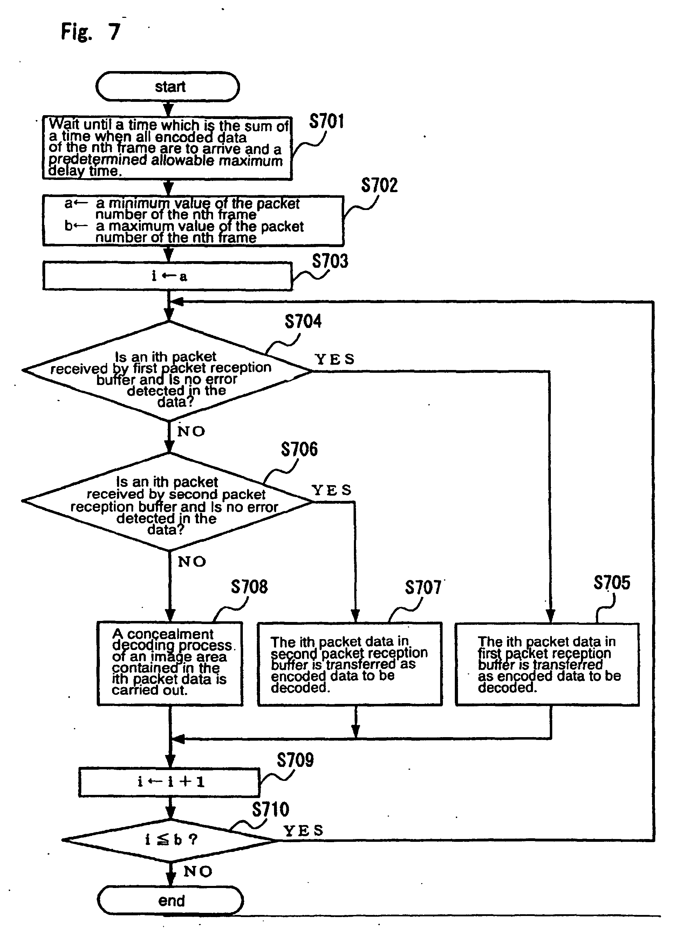

An encoded data reconstructing sequence of encoded data reconstructor 202 according to the third embodiment will be described below with reference to a flowchart shown in Fig. 7. The sequence shown in Fig. 7 represents a process of reconstructing encoded data of an nth frame where n is an integer.

In step S701, control waits until a time which is the sum of a time when all encoded data of the nth frame are to arrive at first packet reception buffer 211-1 and second packet reception buffer 211-2 and a predetermined allowable maximum delay time. Then, control goes to step S702.

In step S702, a minimum value of the packet number of the nth frame is stored in a variable a which stores the packet number, and a maximum value of the packet number of the nth frame is stored in a variable b.

In step S703, the value of the variable a is substituted for a variable i which stores the packet number. Then, control starts a repetitive loop from step S704.

In step S704, the following branching process is performed depending on the results of errors and packet losses detected by first packet error detector/packet loss detector 213-1: If an ith packet of the nth frame is received by first packet reception buffer 211-1 and no error is detected in the data, then control goes to step S705. Otherwise, control goes to step S706.

In step S705, the ith packet data of the nth frame output from first encoded data extractor 212-1 is transferred as encoded data to be decoded to variable-length decoder 251. Then, control goes to step S709.

In step S706, the following branching process is performed depending on the results of errors and packet losses detected by second packet error detector/packet loss detector 213-2: If the ith packet of the nth frame is received by second packet reception buffer 211-2 and no error is detected in the data, then control goes to step S707. Otherwise, control goes to step S708.

In step S707, the ith packet data of the nth frame output from second encoded data extractor 212-2 is transferred as encoded data to be decoded to variable-length decoder 251. Then, control goes to step S709.

Control proceeds to step S708 when the ith packet data of the nth frame cannot be received free of bit errors and packet losses by either one of the first and second packet reception buffers. In step S708, therefore, a concealment process for making less visible corruptions of a decoded image area contained in the ith packet data is carried out by an appropriate method.

For example, a command is sent to the moving picture data decoder to use a decoded image of a preceding (n-1)th frame as a decoded image contained in the ith packet data of the nth frame. Alternatively, if first packet reception buffer 211-1 has received incomplete ith packet data of the nth frame, then the received packet data is used for decoding the nth frame. If the packet data is not received by first packet reception buffer 211-1 and second packet reception buffer 211-2 has received incomplete ith packet data of the nth frame, then the packet data obtained by the second packet reception buffer is used for decoding the nth frame. If the ith packet data of the nth frame is not received by both the first and second packet reception buffers, then a decoded image of a preceding (n-1)th frame is displayed.

After the above concealment process is performed in step S708, control goes to step S709.

In step S709, the variable i is incremented by 1. In step S71 0, it is determined whether the variable b does not exceed the value of the variable b. If the variable b does not exceed the value of the variable b, then the repetitive process is finished, and the process of reconstructing encoded data of the nth frame is put to an end.

The operation of encoded data reconstructor 202 according to the third embodiment has been described above.

Fig. 7 illustrates the operation of encoded data reconstructor 202 where, as shown in Figs. 2 and 3, N shown in Fig. 1 is "2", moving picture encoding apparatus 100 has first moving picture encoder/sender 101-1 and second moving picture encoder/sender 101-2, and moving picture decoding apparatus 200 has first encoded data receiver 201-1 and second encoded data receiver 201-2.

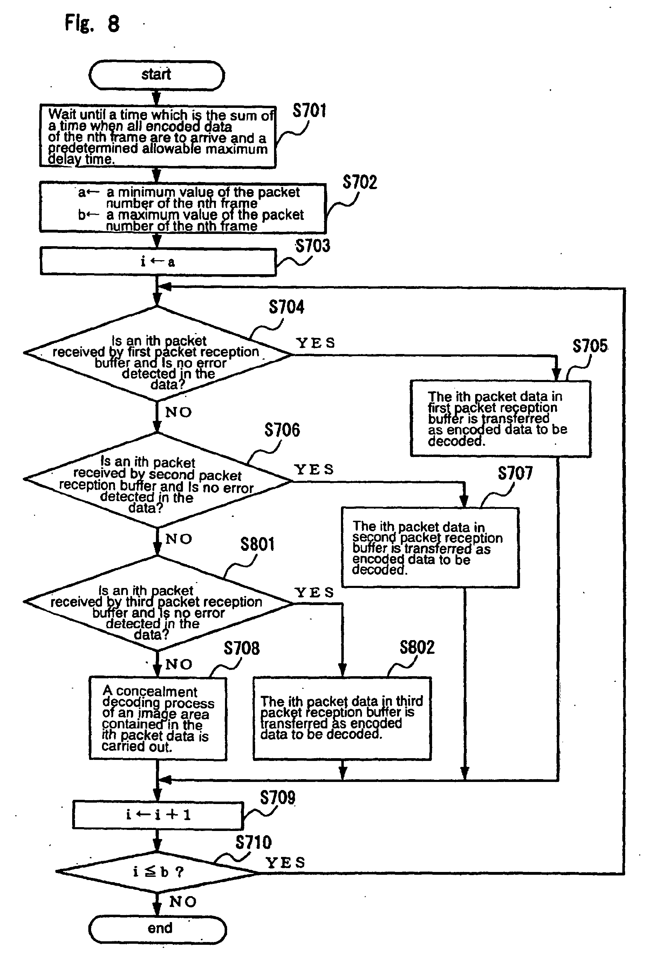

If N shown in Fig. 1 is "3" and three or more encoded data are transmitted from moving picture encoding apparatus 100 to moving picture decoding apparatus 200, then encoded data reconstructor 202 operates according to a flowchart shown in Fig. 8.

In the operation of encoded data reconstructor 202 shown in Fig. 7, moving picture encoding apparatus 100 has first moving picture encoder/sender 101-1 through third moving picture encoder/sender 101-3, moving picture decoding apparatus 200 has first encoded data receiver 201-1 through third encoded data receiver 201-3, and the compression ratio for frame encoding is successively higher in the order from first moving picture encoder/sender 101-1 through third moving picture encoder/sender 101-3.

In Fig. 8, the steps represented by the same step numbers as those in Fig. 7 represent the same processing as in Fig. 7, and steps S801, S802 are added. Specifically, if the ith packet is not present in the second packet reception buffer or if the ith packet is present in the second packet reception buffer, but suffers a bit error, then if the ith packet of the nth frame is received in the third packet reception buffer and no error is detected in the received data in step S801, the ith packet data of the nth frame output from third encoded data extractor 212-3 is transferred as encoded data to be decoded to variable-length decoder 251 in step S802.

If the ith packet of the nth frame is present in any one of the packet reception buffers or if the ith packet of the nth frame is present in either one of the packet reception buffers, but a bit error is detected in the data, then the concealment process in step S708 is performed.

As described above, the packet data having the low compression ratio for frame encoding is preferentially transferred as encoded data to variable-length decoder 251.

If the compression ratios for frame encoding of second moving picture encoder/sender 101-2 and third moving picture encoder/sender 101-3 are the same as each other, then priority may be given to either one of their encoded data.

In the encoded data reconstructing sequence of encoded data reconstructor 202, any processes of waiting for the reception of the encoded data of the nth frame may be employed in step S701 insofar as they are capable of detecting packet losses while holding a packet transmission delay within a predetermined range.

According to the third embodiment as described above, moving picture encoding apparatus 100 encodes one moving picture data into two encoded data and sends the encoded data at a constant or adaptively variable time interval. Second moving picture encoder/sender 101-2 compression-encodes frames encoded by first encoder/sender 101-1 based on interframe prediction by referring to a frame at the same time as the interframe prediction performed by first encoder/sender 101-1. The reception side selects and decodes packets of encoded data which are of a low compression ratio and high image quality from the properly received encoded data.

As a result, even if the transmission path is of low reliability, frequently causing transmission errors and packet errors of highly burst nature, the probability that both the two encoded data are transmitted in error is reduced, making it possible to prevent transmitted decoded images from suffering significant corruptions. An increase caused in the transmission band when the second encoded data are sent may be reduced by increasing the compression ratio of the second encoded data. Furthermore, since the decoding apparatus may decode only one of the two encoded data that are received, the amount of calculations that are required thereby is not appreciably greater than the amount of calculations that are required by ordinary moving picture decoding apparatus.

The third embodiment may be combined with the second embodiment, and the combination may provide the same advantages as with the second embodiment.

The moving picture transmission system according to each of the above embodiments may be realized by hardware-implemented functions of the moving picture encoding apparatus and the moving picture decoding apparatus, or by loading a moving picture transmission program comprising moving picture encoding program 600 and moving picture decoding program 700 which have the above functions of the moving picture encoding apparatus and the moving picture decoding apparatus into a memory of a computer processor and executing the loaded moving picture transmission program. Moving picture encoding program 600 and moving picture decoding program 700 are stored in a magnetic disk, a semiconductor memory, or any of other recording mediums, are loaded from the recording medium into the computer processor, and control operation of the computer processor to achieve the above functions.

While the present invention has been described with respect to the preferred embodiments, the present invention is not limited to the above embodiments, but various modifications may be made within the scope of the technical concept of the invention.

## Claims

1. A moving picture transmission system comprising a transmission side sending encoded moving picture data and one or plural reception sides decoding the encoded moving picture data, wherein
said transmission side compresses input moving picture frames into a plurality of encoded data at multiple compression ratios and sends said plurality of encoded data; and
each one of said reception sides selects one of encoded data with frame-by-frame selection from the plurality of encoded data received by the reception side without error and decodes the selected encoded data.

2. A moving picture transmission system according to claim 1, wherein
said transmission side compresses input moving picture frames into a plurality of encoded data at multiple compression ratios and assigns a priority order to each data of said encoded data subject to a predetermined assignment rule,and sends said plurality of encoded data; and
each one of said reception sides selects the encoded data having the highest priority order with frame-by-frame selection from the plurality of encoded data received by the reception side without error and decodes the selected encoded data.

3. A moving picture transmission system according to claim 1, wherein
said transmission side sends, as said plurality of encoded data comprising primary encoded data produced by compressing the input moving picture frames using interframe prediction, and encoded data produced by compressing the input moving picture frames at one or plural compression ratios which are higher than said primary encoded data, using interframe prediction referring to frames positioned at the same time as the reference frames referred to in the interframe prediction of said primary encoded data.

4. A moving picture transmission system according to claim 3, wherein said transmission side sends a plurality of encoded data comprising all compression-encoded data or encoded data of selected frames.

5. A moving picture transmission system according to claim 3, wherein said reception side selects the encoded data having the lowest compression ratio and decodes the selected encoded data.

6. A moving picture transmission system comprising a transmission side sending encoded moving picture data and one or plural reception sides decoding the encoded moving picture data, wherein
said transmission side sends a plurality of encoded data comprising primary packet data produced by compressing input moving picture frames into one or plural packets and one or plural packet data produced by compressing the same image area as contained in each packet of said primary packet data at one or plural compression ratios which are higher than said primal packet data; and
each one of said reception sides selects either one of the encoded data with packet-by-packet selection from the plurality of encoded packet data received by said transmission reception side without error, and decodes the selected encoded data.

7. A moving picture transmission system according to claim 6, wherein said transmission side sends a plurality of encoded data comprising primary packet data produced by compressing input moving picture frames into one or plural packets, and one or plural packet data produced by compressing the same image area contained in each packet of said primary packet data at one or plural compression ratios which are higher than said primal packet data, each of said packet data being assigned priority order subject to a predetermined assignment rule; and
each one of said reception sides selects the encoded packet data having the highest priority order with packet-by-packet selection from the plurality of packet data received by said reception side without error, and decodes the selected encoded data.

8. A moving picture transmission system according to claim 6, wherein said transmission side sends a plurality of encoded data comprising primary packet data produced by compressing input moving picture frames into one or plural packets using interframe prediction, and one or plural packet data produced by compressing the same image area contained in each packet of said primary packet data at one or plural compression ratios which are higher than said primary packet data using interframe prediction referring to frames positioned at the same time as the reference frames referred to in the interframe prediction of said primary packet data.

9. A moving picture transmission system according to claim 8, wherein said transmission side sends a plurality of encoded data comprising all compression-encoded packet data or selected packet data.

10. A moving picture transmission system according to claim 8, wherein each of said reception sides selects the packet data having the lowest compression ratio and decodes the selected encoded data.

11. A moving picture transmission system according to claim 3, wherein said transmission side multiplexes said plurality of encoded data with time differences added therebetween and sends the multiplexed encoded data, and each one of said reception sides demultiplexes the multiplexed and sent data into a plurality of encoded data.

12. A moving picture transmission system according to claim 8, wherein said transmission side multiplexes said plurality of encoded data with time differences added therebetween and sends the multiplexed encoded data, and each one of said reception sides demultiplexes the multiplexed and sent data into a plurality of encoded data.

13. A moving picture transmission system according to claim 3, comprising a moving picture encoding apparatus as said transmission side and one or plural moving picture decoding apparatuses as said reception sides;
said moving picture encoding apparatus having:
a plurality of encoding means for compressing input moving picture frames into a plurality of encoded data at multiple compression ratios and sending the encoded data;
each one of said moving picture decoding apparatuses having:
a plurality of encoded-data-receiving means for receiving the plurality of encoded data which have been sent and detecting bit errors or packet losses of the received encoded data;
a selecting mean for selecting the encoded data of the lowest compression ratio from the encoded data which have been received free of bit errors or packet losses by said encoded-data-receiving means with frame-by-frame selection; and
a decoding mean for decoding the encoded data selected by said selecting mean.

14. A moving picture transmission system according to claim 8, comprising a moving picture encoding apparatus as said transmission side and one or plural moving picture decoding apparatuses as said reception sides;
said moving picture decoding apparatus having:
a plurality of encoding means for compressing input moving picture fraems into a plurality of encoded data at multiple compression ratios and sending the encoded data;
said moving picture encoding apparatus having:
a plurality of encoded-data-receiving means for receiving the plurality of encoded data which have been sent and detecting bit errors or packet losses of the received encoded data;
a selecting mean for selecting the encoded data of the lowest compression ratio from the encoded data which have been received free of bit errors or packet losses by said encoded-data-receiving means with packet-by-packet selection; and
a decoding mean for decoding the encoded data selected by said selecting mean.

15. A moving picture transmission system according to claim 11, wherein said transmission side has delay-adding means for delaying part of said encoded data to add the time differences between said plurality of encoded data, and multiplexing means for multiplexing said plurality of encoded data with the time differences added therebetween and sending the multiplexed encoded data, and each one of said reception sides has demultiplexing means for demultiplexing the multiplexed and sent data into a plurality of encoded data.

16. A moving picture transmission system according to claim 12, wherein said transmission side has delay-adding means for delaying part of said encoded data to add the time differences between said plurality of encoded data, and multiplexing means for multiplexing said plurality of encoded data with the time differences added therebetween and sending the multiplexed encoded data, and each one of said reception sides has demultiplexing means for demultiplexing the multiplexed and sent data into a plurality of encoded data.

17. A moving picture encoding apparatus for compressing moving picture data and sending the encoded data to one or plural moving picture decoding apparatuses, wherein the moving picture encoding apparatus sends, to said moving picture decoding apparatuses, a plurality of encoded data comprising primary encoded data produced by compressing the input moving picture frames using interframe prediction, and encoded data produced by compressing the input moving picture frames at one or plural compression ratios which are higher than said primary encoded data using interframe prediction referring to frames positioned at the same time as the reference frames referred to in the interframe prediction of said primary encoded data.

18. A moving picture encoding apparatus according to claim 17, wherein the moving picture encoding apparatus sends a plurality of encoded data comprising all encoded data or encoded data of selected frames.

19. A moving picture encoding apparatus for compressing moving picture data and sending the encoded data to one or plural moving picture decoding apparatuses, wherein the moving picture encoding apparatus sends, to said moving picture decoding apparatuses, a plurality of encoded data comprising primary packet data produced by compressing input moving picture frames using interframe prediction, and one or plural packet data produced by compressing the same image area as contained in each packet of said primary packet data at one or plural compression ratios which are higher than said primary packet data using interframe prediction referring to frames positioned at the same time as reference frames referred to in the interframe prediction of said primary packet data.

20. A moving picture encoding apparatus according to claim 19, wherein the moving picture encoding apparatus sends a plurality of encoded data comprising all encoded data or selected packet data.

21. A moving picture encoding apparatus according to claim 17, further comprising delay-adding means for delaying part of said encoded data to add the time differences between said plurality of encoded data, and multiplexing means for multiplexing said plurality of encoded data with the time differences added therebetween and sending the multiplexed encoded data.

22. A moving picture encoding apparatus according to claim 19, further comprising delay-adding means for delaying part of said encoded data to add the time differences between said plurality of encoded data, and multiplexing means for multiplexing said plurality of encoded data with the time differences added therebetween and sending the multiplexed encoded data.

23. A moving picture decoding apparatus for receiving data produced by compressing moving picture data from a moving picture encoding apparatus and decoding the received data, wherein the moving picture decoding apparatus receives a plurality of encoded data comprising primary encoded data produced by compressing input moving picture frames using interframe prediction, and encoded data produced by compressing the input moving picture frames at one or plural compression ratios which are higher than said primary encoded data using interframe prediction referring to frames positioned at the same time as the reference frames used in the interframe prediction of said primary encoded data, and selects the encoded data having the lowest compression ratio with frame-by-frame selection from said encoded data free of bit errors or packet losses of the received encoded data, and decodes the selected encoded data.

24. A moving picture decoding apparatus for receiving data produced by compressing moving picture data from a moving picture encoding apparatus and decoding the received data, wherein the moving picture decoding apparatus receives a plurality of encoded data comprising primary packet data produced by compressing input moving picture frames using interframe prediction, and one or plural packet data produced by compressing the same image area as contained in each packet of said primary packet data at one or plural compression ratios which are higher than said primary packet data using interframe prediction referring to frames positioned at the same time as the reference frames referred in the interframe prediction of said primary packet data, and selects the encoded data having the lowest compression ratio with packet-by-packet selection from said encoded data free of bit errors or packet losses of the received encoded data, and decodes the selected encoded data.

25. A moving picture decoding apparatus according to claim 23, comprising demultiplexing means for demultiplexing the plurality of encoded data which have been multiplexed with time differences added therebetween and sent, into a plurality of encoded data.

26. A moving picture decoding apparatus according to claim 24, comprising demultiplexing means for demultiplexing the plurality of encoded data which have been multiplexed with time differences added therebetween and sent, into a plurality of encoded data.

27. A moving picture transmission system having a moving picture transmission program for enabling a computer processor to encode moving picture data and send encoded data at a transmission side, and enabling a computer processor to receive and decode the encoded data at reception sides, wherein said moving picture transmission program enables the computer processor at the transmission side to compress input moving picture frames into a plurality of encoded data at multiple compression ratios and sends the encoded data, and enables the computer processor at said reception side to select any one encoded data with frame-by-frame selection from the plurality of properly received encoded data and decode the selected encoded data.

28. A moving picture transmission system having a moving picture transmission program according to claim 27, wherein said moving picture transmission program enables the computer processor at said reception side to select the encoded data having the lowest compression ratio with frame-by-frame selection from the plurality of properly received encoded data and decode the selected encoded data.

29. A moving picture transmission system having a moving picture transmission program for enabling a computer processor to encode moving picture data and send the encoded data at a transmission side, and enabling a computer processor to receive and decode the encoded data at a reception side, wherein said moving picture transmission program enables the computer processor at the transmission side to send a plurality of encoded data comprising primary packet data produced by compressing input moving picture frames and one or plural packet data produced by compressing the same image area as contained in each packet of said primary packet data at one or plural compression ratios which are higher than said primary packet data, and enables the computer processor at said reception side to select either one of the encoded data with packet-by-packet selection from the plurality of properly received encoded data, and decode the selected encoded data.

30. A moving picture transmission system having a moving picture transmission program according to claim 29, wherein said moving picture transmission program enables the computer processor at said reception side to select the encoded data having the lowest compression ratio with packet-by-packet selection from the plurality of properly received encoded data and decode the selected encoded data.

## Amended claims

### Amended claims under Art. 19.1 PCT

**11.** A moving picture transmission system according to claim 3 or 8, wherein said transmission side multiplexes said plurality of encoded data with time differences added therebetween and sends the multiplexed encoded data, and each one of said reception sides demultiplexes the multiplexed and sent data into a plurality of encoded data.

**12.** A moving picture transmission system according to claim 3, comprising a moving picture encoding apparatus as said transmission side and one or plural moving picture decoding apparatuses as said reception sides;
said moving picture encoding apparatus having:
a plurality of encoding means for compressing input moving picture frames into a plurality of encoded data at multiple compression ratios and sending the encoded data;
each one of said moving picture decoding apparatuses having:
a plurality of encoded-data-receiving means for receiving the plurality of encoded data which have been sent and detecting bit errors or packet losses of the received encoded data;
a selecting mean for selecting the encoded data of the lowest compression ratio from the encoded data which have been received free of bit errors or packet losses by said encoded-data-receiving means with frame-by-frame selection; and
a decoding mean for decoding the encoded data selected by said selecting mean.

**13.** A moving picture transmission system according to claim 8, comprising a moving picture encoding apparatus as said transmission side and one or plural moving picture decoding apparatuses as said reception sides;
said moving picture decoding apparatus having:
a plurality of encoding means for compressing input moving picture fraems into a plurality of encoded data at multiple compression ratios and sending the encoded data;
said moving picture encoding apparatus having:
a plurality of encoded-data-receiving means for receiving the plurality of encoded data which have been sent and detecting bit errors or packet losses of the received encoded data;
a selecting mean for selecting the encoded data of the lowest compression ratio from the encoded data which have been received free of bit errors or packet losses by said encoded-data-receiving means with packet-by-packet selection; and
a decoding mean for decoding the encoded data selected by said selecting mean.

**14.** A moving picture transmission system according to claim 11, wherein said transmission side has delay-adding means for delaying part of said encoded data to add the time differences between said plurality of encoded data, and multiplexing means for multiplexing said plurality of encoded data with the time differences added therebetween and sending the multiplexed encoded data, and each one of said reception sides has demultiplexing means for demultiplexing the multiplexed and sent data into a plurality of encoded data.

**15.** A moving picture encoding apparatus for compressing moving picture data and sending the encoded data to one or plural moving picture decoding apparatuses, wherein the moving picture encoding apparatus sends, to said moving picture decoding apparatuses, a plurality of encoded data comprising primary encoded data produced by compressing the input moving picture frames using interframe prediction, and encoded data produced by compressing the input moving picture frames at one or plural compression ratios which are higher than said primary encoded data using interframe prediction referring to frames positioned at the same time as the reference frames referred to in the interframe prediction of said primary encoded data.

**16.** A moving picture encoding apparatus according to claim 15, wherein the moving picture encoding apparatus sends a plurality of encoded data comprising all encoded data or encoded data of selected frames.

**17.** A moving picture encoding apparatus for compressing moving picture data and sending the encoded data to one or plural moving picture decoding apparatuses, wherein the moving picture encoding apparatus sends, to said moving picture decoding apparatuses, a plurality of encoded data comprising primary packet data produced by compressing input moving picture frames using interframe prediction, and one or plural packet data produced by compressing the same image area as contained in each packet of said primary packet data at one or plural compression ratios which are higher than said primary packet data using interframe prediction referring to frames positioned at the same time as reference frames referred to in the interframe prediction of said primary packet data.

**18.** A moving picture encoding apparatus according to claim 17, wherein the moving picture encoding apparatus sends a plurality of encoded data comprising all encoded data or selected packet data.

**19.** A moving picture encoding apparatus according to claim 15, 16, 17 or 18 further comprising delay-adding means for delaying part of said encoded data to add the time differences between said plurality of encoded data, and multiplexing means for multiplexing said plurality of encoded data with the time differences added therebetween and sending the multiplexed encoded data.

**20.** A moving picture decoding apparatus for receiving data produced by compressing moving picture data from a moving picture encoding apparatus and decoding the received data, wherein the moving picture decoding apparatus receives a plurality of encoded data comprising primary encoded data produced by compressing input moving picture frames using interframe prediction, and encoded data produced by compressing the input moving picture frames at one or plural compression ratios which are higher than said primary encoded data using interframe prediction referring to frames positioned at the same time as the reference frames used in the interframe prediction of said primary encoded data, and selects the encoded data having the lowest compression ratio with frame-by-frame selection from said encoded data free of bit errors or packet losses of the received encoded data, and decodes the selected encoded data.

**21.** A moving picture decoding apparatus for receiving data produced by compressing moving picture data from a moving picture encoding apparatus and decoding the received data, wherein the moving picture decoding apparatus receives a plurality of encoded data comprising primary packet data produced by compressing input moving picture frames using interframe prediction, and one or plural packet data produced by compressing the same image area as contained in each packet of said primary packet data at one or plural compression ratios which are higher than said primary packet data using interframe prediction referring to frames positioned at the same time as the reference frames referred in the interframe prediction of said primary packet data, and selects the encoded data having the lowest compression ratio with packet-by-packet selection from said encoded data free of bit errors or packet losses of the received encoded data, and decodes the selected encoded data.

**22.** A moving picture decoding apparatus according to claim 20 or 21, comprising demultiplexing means for demultiplexing the plurality of encoded data which have been multiplexed with time differences added therebetween and sent, into a plurality of encoded data.

**23.** A moving picture transmission system having a moving picture transmission program for enabling a computer processor to encode moving picture data and send encoded data at a transmission side, and enabling a computer processor to receive and decode the encoded data at reception sides, wherein said moving picture transmission program enables the computer processor at the transmission side to compress input moving picture frames into a plurality of encoded data at multiple compression ratios and sends the encoded data, and enables the computer processor at said reception side to select any one encoded data with frame-by-frame selection from the plurality of properly received encoded data and decode the selected encoded data.

**24.** A moving picture transmission system having a moving picture transmission program for enabling a computer processor to encode moving picture data and send the encoded data at a transmission side, and enabling a computer processor to receive and decode the encoded data at a reception side, wherein said moving picture transmission program enables the computer processor at the transmission side to send a plurality of encoded data comprising primary packet data produced by compressing input moving picture frames and one or plural packet data produced by compressing the same image area as contained in each packet of said primary packet data at one or plural compression ratios which are higher than said primary packet data, and enables the computer processor at said reception side to select either one of the encoded data with packet-by-packet selection from the plurality of properly received encoded data, and decode the selected encoded data.

**25.** A moving picture transmission system having a moving picture transmission program according to claim 23 or 24, wherein said moving picture transmission program enables the computer processor at said reception side to select the encoded data having the lowest compression ratio with packet-by-packet selection or frame-by-frame selection, respectively, from the plurality of properly received encoded data and decode the selected encoded data.
